# EUROPEAN PATENT SPECIFICATION

(11) **EP 2 548 369 B1**
(45) Date of publication and mention of the grant of the patent: **07.11.2018**
(21) Application number: 11708052.3
(22) Date of filing: 14.03.2011
(51) Int. Cl.: G06F 1/16, G06F 3/01, G08C 17/02, H04N 5/44, H04N 21/422

(54) **METHOD AND DEVICE FOR THE REMOTE CONTROL OF TERMINAL UNITS**
VERFAHREN UND VORRICHTUNG ZUR FERNSTEUERUNG VON ENDGERÄTEN
PROCÉDÉ ET DISPOSITIF POUR TÉLÉCOMMANDER DES ÉQUIPEMENTS TERMINAUX

(30) Priority: 15.03.2010 DE 102010011473
(43) Date of publication of application: 23.01.2013
(73) Proprietor: Institut für Rundfunktechnik GmbH, 80939 München (DE)
(72) Inventor: OBERMÜLLER, Sebastian, 80939 Munich (DE); SCHMALOHR, Martin, 80939 Munich (DE)
(74) Representative: Koplin, Moritz
(86) International application number: PCT/EP2011/053820
(87) International publication number: WO 2011/113800

(56) References cited:
- WO-A1-2009/024881
- US-A1- 2004 218 104
- US-A1- 2005 212 911

## Description

### Field of invention

The invention relates to a method and device for the remote control of terminal units.

### Description of the prior art

It is known to control terminal units of consumer electronics, such as e.g. television sets, stereo equipment, DVD players, game consoles and multimedia PCs, by pressing keys on remote controls. A keystroke directly triggers the transmission of a short infrared or near radio signal which is then received by the terminal unit and used for controlling functions.

It is moreover known to control video games on game consoles with motion sensitive controllers. Examples of this are the game consoles "Wii" by Nintendo and "Playstation" by Sony. These controllers have micro-electro-mechanical motion sensors and wirelessly transmit measured motion data to the console where they are evaluated and converted into control commands for games and applications.

For personal computers (PC), motion-sensitive peripheral units in the form of remote controls or as presentation aid are also known. Examples of this are the devices "Media Center Remote" by the company Gyration, and "WavIt" by the company ThinkOptics. Such peripheral units permit to control the mouse pointer by moving the remote control.

It is furthermore possible to alternatively use some of the above mentioned controllers of game consoles at the PC if they support open communication logs such as Bluetooth.

It is furthermore known to control PCs and game consoles without any additional devices exclusively by moving one or two hands. For this control by hand gestures, the shape and the movement of the hands are evaluated by means of cameras. Examples of this are a television set by the company Toshiba, the "EyeToy" camera for the "Playstation" by Sony. In the course of the "Projekt Natal", the company Microsoft moreover develops an upgrade for the in-house game console "Xbox 360" which is to permit control on the basis of the evaluation of motion sequences of the whole human body.

US2005/0212911 discloses a handheld device including a gesture database generating commands to control a controllable device.

### Summary of the invention.

Compared with this, the object of the invention consists in providing a method for the control of terminal units by means of a remote control in which the movement of the remote control is detected and evaluated by the remote control itself. The remote control is thus to be able to autonomously and independently interpret motion sequences of a unit to be controlled as gestures and to convert them into simplified commands for controlling the terminal unit.

According to the invention, this object is achieved by the features of patent claim 1.

Advantageous embodiments and further developments of the method according to the invention can be taken from the method subclaims.

Another object of the invention is a device according to the features of claim 4.

Advantageous embodiments and further developments of the device according to the invention can be taken from the device subclaims.

In contrast to prior art, in the method according to the invention, not the motion information themselves, but only the commands derived from them are to be transmitted to the terminal unit. The interpretation of the movement accordingly no longer, or not exclusively, takes place in the terminal unit, but in the remote control itself. As a result, the invention is directed to a functional encapsulation of motion detection in the remote control itself. Thereby, the additional function of gesture-based control can be made without modifying nor extending the communication between the terminal unit and the remote control.

The functional encapsulation of the motion detection in the remote control has an advantage in that no longer the motion data themselves, but only simplified control commands must be transmitted from the remote control to the terminal unit. Thereby, a considerable reduction of the required bandwidth for the transmission of the data can be obtained. Moreover, the method according to the invention permits to employ an energy efficient, non-bidirectional transmission at low data rates. This in turn permits to use, instead of a complex radio connection, the conventional infrared transmission which finds application as industrial standard in nearly all units of entertainment electronics. One can moreover assume that gesture detection altogether is more robust because the motion data do not have to be transmitted before they are detected.

It is thus possible to operate all terminal units that can be controlled with conventional infrared remote controls additionally or exclusively with the aid of gestures. In addition, however, future terminal units can in this manner also be equipped with novel functions. Furthermore, the working mode of the remote control itself can benefit from the method according to the invention by also utilizing unconsciously performed motion sequences, for example for waking up the hand transmitter from a power saving function, which as a consequence could in turn trigger the control of the terminal unit. In addition, the method according to the invention is suited for realizing interactive learning functions in which the remote control offers the user to automatically link typical, frequently carried out motion sequences with important control functions.

### Brief description of the drawings.

The invention will be illustrated more in detail below, by way of a mere exemplifying and non limiting example, with reference to the drawings. In the drawings:
Figs. 1.1 to 1.4 show representations of the translation movement in the X,Y,Z directions as well as the rotary motion about the X,Y,Z axis of a remote control in the non-operative state, in a reference position and during activation when a non-operative threshold value is exceeded, and
Fig. 2 shows a flow chart of the individual steps of the method according to the invention.

### Detailed description of preferred embodiment.

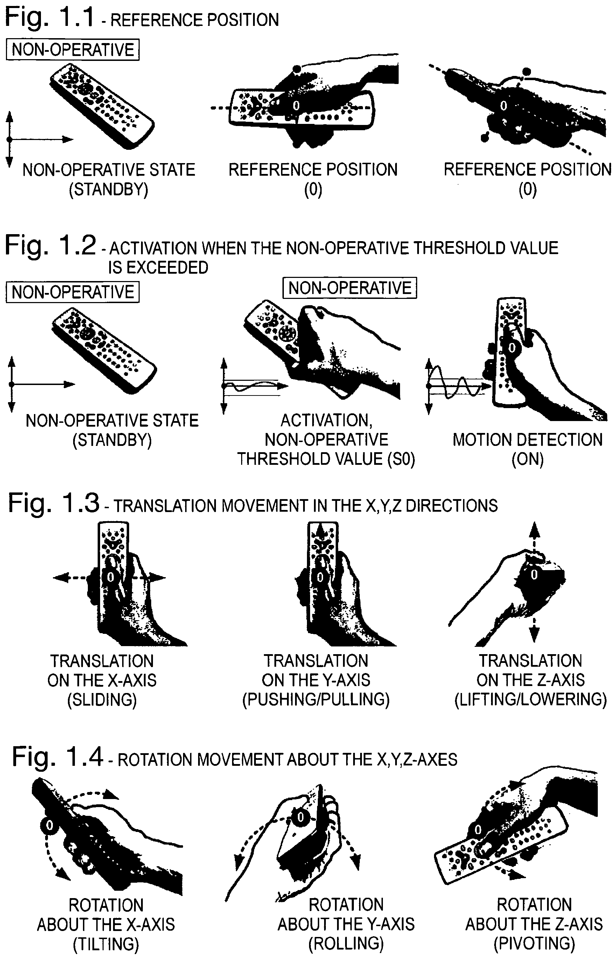

For understanding the representations in Figures 1.1 to 1.4, first the used notions will be defined below:

### Remote Control

The remote control (RC) is an electronic, battery powered hand-held equipment by means of which units or machines can be operated wirelessly over short to medium distances. Wireless data transmission is accomplished by means of infrared radiation or radio waves.

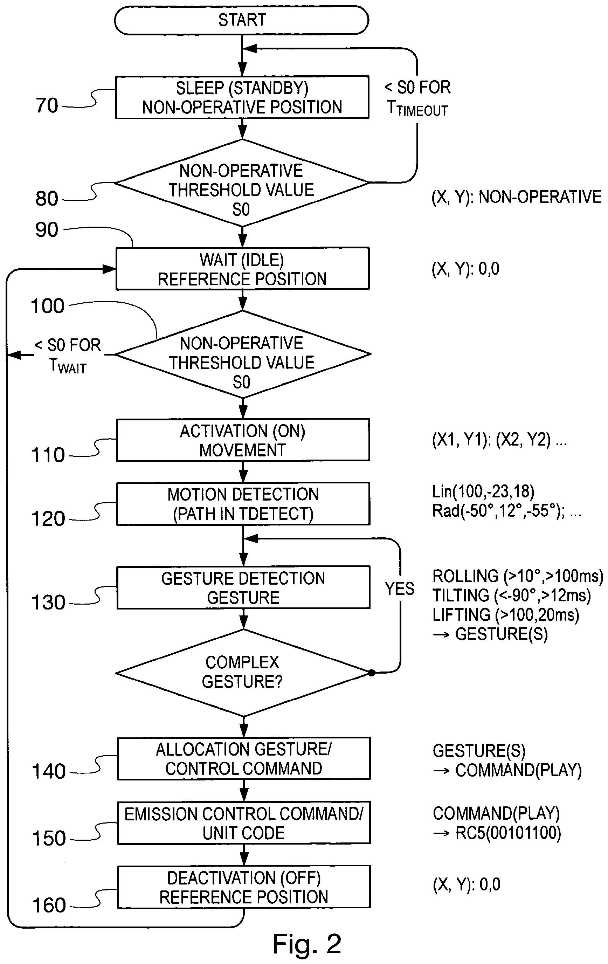

### Reference position (Fig. 1.1 and Fig. 2)

Reference position (0) designates the three-dimensional orientation of the remote control in the room at the starting time (T0) as long as the hand of the user is at rest. The position of a putdown remote control which is not being used is referred to as non-operative position (NON-OPERATIVE). The reference position represents the local and chronological starting value of a GESTURE to be carried out. All movements are evaluated relative to the reference position. An absolute reference point independent of the remote control in the room is not required for the method according to the invention as the reference position is determined anew at the beginning of a detection operation depending on a threshold value or a user input.

### Threshold value (Fig. 1.2 and Fig. 2)

To distinguish between slow and fast movements as well as the stationary case where the remote control is non-operative, threshold values are introduced. The threshold value (S) defines a certain, absolute output value of a technical quantity which is in relation to the movement of the remote control during a limited period (T_{WAIT}, T_{TIMEOUT}). Movements below a non-operative threshold value (S0) to be determined are ignored and no gesture detection takes place (OFF). Thereby, small deflections of the remote control which the user carries out unconsciously or at rest when no control operation is desired are ignored. Movements whose output value exceeds the non-operative threshold value (S0) are used for gesture detection (ON). The non-operative threshold value can furthermore be used for realizing a power-saving mode (STANDBY) to which the remote control changes as soon as it is NON-OPERATIVE. Moreover, additional operating modes are determined by orders of acceleration having different values. As an alternative, gesture detection can also be activated or deactivated by the user himself/herself by a keystroke.

### Movement

Movement means a real, single operation carried out by the user consciously or unconsciously with the remote control in the hand. Here, the combined motion sequence of the hand, the arms and the body is considered as uniform process in view of a spatial motion path of the remote control. The remote control here represents an object oriented in the three-dimensional room whose relative position is changed by the user depending on the reference position in six basic movement types. Certain dynamics of the motion sequence, that means each acceleration or a change of the movement type, is interpreted as GESTURE in the process.

### Rotation (Fig. 1.4 and Fig. 2)

Each rotation of the remote control about one or several spatial axes (X, Y, Z) relative to the reference position (0) is referred to as rotation. Here, a distinction is made between a rotation about the Z-axis in the horizontal plane (pivoting), the rotation about the X-axis in the vertical plane (tilting), and the rotation about the Y-axis or the longitudinal axis of the remote control (rolling).

### Translation (Fig. 1.3 and Fig. 2)

Each linear deflection of the remote control to a certain direction relative to the reference position is referred to as translation. Here, a distinction is made between a vertical translation on the Z-axis (lifting/lowering), the longitudinal translation on the Y-axis away from the body or towards the body (pushing/pulling), and the horizontal translation on the X-axis to the left or to the right (sliding).

### Gesture

A completed motion sequence or a certain sequence of several movements is interpreted as GESTURE. For this, changes of the acceleration in the motion sequence are evaluated. The characteristic dynamics derived from it is allocated to a certain GESTURE. In the sense of the method according to the invention, a distinction is made between simple and complex gestures. A simple GESTURE describes dynamics with only one change of direction. Complex gestures are composed of several simple gestures. The dynamics to a GESTURE can be preprogrammed in the remote control or be programmed by the user himself/herself into the hand-held equipment by the LEARNING MODE during first commissioning or on request. In case of preprogrammed GESTURES, the user must imitate a certain, predetermined motion sequence of the manufacturer. For this, the manufacturer must include a corresponding instruction in the terminal unit or in the documentation which will be referred to as LIST OF GESTURES below. In case of a LEARNING MODE, the user can allocate a completely imaginary, spontaneously carried out GESTURE to a certain control function of his/her terminal unit. A combination of a LIST OF GESTURES and a LEARNING MODE can be accomplished, for example, by means of interactive operator guidance during the initial setup of the terminal unit and/or the remote control.

Hereinafter, the functional sequence of the method according to the invention will be illustrated with reference to Fig. 2. To transmit a control command from the remote control to the terminal unit - starting from the determination of an exceeding of the non-operative threshold value S0 by a decision diamond 100 - the following processing steps are carried out:
- Activation 110
- Motion detection 120
- Gesture detection 130
- Allocation of a control command 140
- Emission of a control code 150
- Deactivation 160

### Activation (ON) 110

To prevent an unintentional emission of control commands (COMMAND) to the terminal unit, in the decision diamonds 80 and 100, the remote control ignores small movements below the non-operative threshold value (S0) which the user or the surrounding area exert on the hand-held equipment in the non-operative state (OFF). The decision diamond 80 (< S0 for T_{TIMEOUT}) then resets the remote control to the SLEEP (STANDBY) state 70. The decision diamond 100 (< S0 for T_{WAIT}) sets the remote control into the WAIT state (IDLE). As an alternative or in addition, manual activation by a keystroke ("gyro key", "sensor key") or suited presence sensors such as proximity switches or touch sensors can be provided by the manufacturer. If it is determined in the decision diamond 100 that the non-operative threshold value S0 was exceeded in a movement of the remote control, the SLEEP (STANDBY) 70 and WAIT (IDLE) 90 states are interrupted by the activation (ON) 110. After the activation, the remote control is ready for receiving movements by the user.

### Motion detection 120

Which GESTURES are allocated to which control commands can be either predetermined by the manufacturer in the remote control or individually allocated by the user/trader. Learned as well as predefined gestures are stored in the remote control as complex or simple motion sequences with certain dynamics. The dynamics of a real motion sequence is understood as a chronological, successive series of sampled values of a motion sensor (GYRO) integrated in the remote control. Whether in the process rotations as well as translations are also evaluated, how many axes the GYRO considers and how fine the time resolution of sampling is selected is up to the manufacturer. Basically, each precise motion detection permits more reliable gesture detection, simultaneously increasing the required computing power and memory requirements in the remote control.

### Gesture detection 130

From the one-, two- or multi-dimensional dynamic motion path recorded in the motion detection 120, characteristic features, such as sequences (STEPS) of certain linear or radial accelerations, for example ROLLING, TILTING, LIFTING, are extracted in the gesture detection 130 after or already during detection. This extraction of a reduced amount of characteristic features represents the essential intelligence of the remote control. Here, it is necessary to reduce the continuous data flow of the GYRO to a few distinctive properties to efficiently design the subsequent allocation to a certain GESTURE. Similar to automatic character recognition, these characteristic features are, when several features match, sorted by means of a reference table (LOOKUPTABLE) and allocated to a certain GESTURE in a LIST OF GESTURES stored in 130. As an alternative to the feature-based detection, a comparing, evaluative algorithm is also conceivable which distinguishes between undetermined sequences with the aid of a neural network.

### Allocation of a control command 140

By a correspondingly detected GESTURE, a control command determined by the user or manufacturer (COMMAND) beforehand, such as "PLAY", is triggered which is allocated to a unit code (CODE), such as e.g. "00101100" for the terminal unit. The allocation of various CODES to certain control commands is stored in a Code Table (CODETABLE) stored in 140. The CODEs can be identical to those which are allocated to the command keys (KEYS) of the remote control or which are used for an extension of the scope of functions beyond the available key functions.

### Emitting a unit code 150

Corresponding to the selected transmission method, the CODE of the control command is encoded as electric signal sequence which is then transmitted to the terminal unit via cable, infrared or high-frequency radio. For transmission, well-known techniques, such as RC-5, RC-6, Bluetooth, X10 or manufacturer-owned log files are possible.

### Deactivation 160

After the successful detection of a GESTURE and the complete emission of the corresponding control code in 150, the remote control is in its waiting state (IDLE) 90 to detect further GESTURES or receive key commands by the user. The gesture detection 130 can be carried out in the IDLE state 90 via the deactivation (OFF) 160. If the user starts again to carry out a further GESTURE, the non-operative threshold value S0 is exceeded which is detected by the decision diamond 100. By this, gesture detection is activated again and the cycle of the procedure steps 110, 120, 130, 140, 150 starts from the beginning. The time at which the motion path of a GESTURE is terminated is determined by the manufacturer ("preprogrammed") or by the user ("learning mode") during the initial setup or on demand at the hand-held equipment. The characteristic features of the dynamics of a certain GESTURE detected in 120 accordingly applies each to a defined period (T_{DETECT}). When the decision diamond 80 determines that the non-operative threshold value S0 has been fallen below over an extended period (T_{TIMEOUT}), the remote control can be set to the power-saving mode Sleep (STANDBY) 70.

The method illustrated with reference to Fig. 2 according to the invention can be extended to a universal or an interactive remote control.

### Universal remote control

The method according to the invention is in particular suited for improving the using convenience and the extension of the scope of functions of a universal remote control which are offered in trade as a replacement of or an alternative to existing remote controls supplied by the manufacturer together with the terminal units. Such universal remote controls often also offer an integrated change-over function between different operating levels which can be in turn allocated to several different terminal units. The gesture-based control according to the invention can for this be employed as an additional extension or else for a mode or level change. In this manner, gesture detection can be used for several terminal units with only one hand-held equipment. In this context, one particularity is the quasi simultaneous control of several terminal units with only one GESTURE. Upon detection of a certain GESTURE, an allocated control sequence (MACRO) can thus be triggered and transmitted which e.g. switches off all terminal units in the room (TV, stereo, DVD) at a time (AUTO-OFF). It would thus be e.g. conceivable that this function is triggered by simply putting down the remote control "upside down" for an extended period. The GESTURE in this case consists of a ROTATION about the Y-axis (ROLLING) by more than 90 degrees with a subsequent non-operative phase (NON-OPERATIVE). Vice versa, the terminal units can be automatically switched on if the user picks up again the remote control after an extended non-operative phase. The number of controllable terminal units and the amount of control commands a remote control can send depends on the size of its memory and its computing power.

### Interactive remote control

The remote control can moreover contain an interactive learning function which offers the user itself to automatically link typical, frequently carried out motion sequences with important control functions. For this, the utilization of a certain button (LEARN) on the remote control is suggested which can trigger an optical signal (BLINK). The remote control indicates the user by blinking (BLINK) of the button or a display (LEARN) that the GYRO noticed a motion sequence which was already carried out several times with the remote control. By pressing the key LEARN, the user signals the remote control that he now wants to link a certain control function (KEY) or a corresponding CODE, respectively, with the just carried out GESTURE. With a further BLINKing, the remote control signals that as of now, the corresponding GESTURE always automatically emits the desired CODE. In this manner, the user himself/herself could interactively teach e.g. the above mentioned MACRO function AUTO OFF to the universal remote control in a simple manner.

Hereinafter, some practical examples of the control of a television set and a DVD player by moving a remote control operating according to the method of the invention will be given.

### Control of a television set

| | |
|---|---|
| Rotation about the longitudinal axis of the remote control to the right, angle of rotation between 60° and 100° | Turn up the volume |
| Rotation about the longitudinal axis of the remote control to the left, angle of rotation between -60° and -100° | Turn down the volume |
| Horizontal rotation to the right | Next sender in the sender list |
| Horizontal rotation to the left | Previous sender in the sender list |

### Control of a DVD player

| | |
|---|---|
| Vertical rotation upwards | Play/Pause |
| Vertical rotation downwards | Stop |
| Horizontal rotation to the right | Next chapter |
| Horizontal rotation to the left | Previous chapter |
| Rotation about the longitudinal axis of the remote control to the right, angle of rotation between 60° and 100° | Forward |
| Rotation about the longitudinal axis of the remote control to the left, angle of rotation between -60° and -100° | Rewind |

Further implementation details will not be described, as the man skilled in the art is able to carry out the invention starting from the teaching of the above description.

At least a part of the method of the present invention can be advantageously implemented by a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

The scope of the invention is defined by the appended claims.

## Claims

1. Method of controlling terminal units or computers by means of a remote control, wherein the movement of the remote control is detected by a sensor in the remote control and converted into control command s, wherein detected motion sequences are autonomously interpreted by the remote control as gestures and converted into simplified commands for controlling the terminal unit or the computer, to the effect that not the motion information themselves, but only the commands derived from it are transmitted to the terminal unit or the computer, movements whose absolute output value is below a non-operative threshold value (S0) being ignored and no gesture detection taking place (OFF), while movements whose absolute output value exceeds said non-operative threshold value (S0) being used for gesture detection (ON), the method further providing a learning mode for learning gestures and storing them in the remote control as complex or simple motion sequences with certain dynamics in the form of a LIST OF GESTURES, wherein changes in the acceleration of the motion sequence are evaluated and characteristic features or evaluative distinctions are derived from said changes in acceleration, said derived characteristic features or evaluative distinctions being sorted with reference to a stored reference table (LOOKUPTABLE), a control command of a code table (CODETABLE) for controlling one or several terminal units being in turn individually allocated to each GESTURE in the LIST OF GESTURES,
the method being **characterized in that**
said control command is allocated by said user, by using a learning button (LEARN) on the remote control, indicating to the user by blinking (BLINK) of the button that sensors detected a motion sequence which was already carried out several times with the remote control, and wherein said user by further pressing said learning button (LEARN) signals to the remote control to link a specific control function (KEY, CODE) with the just carried out detected motion sequence.

2. Method according to claim 1, **characterized by** the following processing steps:
- Activation (110);
- Motion detection (120);
- Gesture detection (130);
- Allocation of a control command (140);
- Emission of a control code (150);
- Deactivation (160).

3. Device for the remote control of terminal units or computers, comprising:
- detecting means, for detecting motion sequences of said device for the remote control, and for interpreting said motion sequences as gestures;
- converting means, for converting said gestures into commands for controlling said terminal unit or computer;
- transmitting means for transmitting said commands to said terminal unit or computer;
- storing means, for storing gestures, learnt in a learning mode or predefined gestures, as complex or simple motion sequences with certain dynamics in the form of a LIST OF GESTURES;
- processing means for processing acceleration variations of said motion sequences and deriving characteristic features or evaluative distinctions;
- sorting means for sorting said derived characteristic features or evaluative distinctions with reference to a stored reference table (LOOKUPTABLE) where a control command of a code table (CODETABLE) for controlling one or several of said terminal units or computers is in turn allocated to each gesture in the LIST OF GESTURES,
the device being **characterized in that** it further comprises means adapted to implement the method of controlling terminal units or computers according to claim 1 or 2.

4. Computer program comprising computer program code means adapted to perform the method of claims 1 or 2, when said program is run on the remote control of claims 1 or 2.

5. A computer readable medium having a program recorded thereon, said computer readable medium comprising computer program code means adapted to perform the method of claims 1 or 2, when said program is run on the remote control of claims 1 or 2.

## Patentansprüche

1. Verfahren zum Bedienen von Terminaleinheiten oder Computern mithilfe einer Fernbedienung, wobei die Bewegung der Fernbedienung durch einen Sensor in der Fernbedienung detektiert wird und in Bedienbefehle umgewandelt wird, wobei detektierte Bewegungssequenzen von der Fernbedienung selbstständig als Gesten interpretiert werden und in vereinfachte Befehle zum Bedienen der Terminaleinheit oder des Computers umgewandelt werden, mit dem Effekt, dass nicht die Bewegungsinformationen selbst, sondern nur die aus ihnen abgeleiteten Befehle zu der Terminaleinheit oder dem Computer übertragen werden, wobei Bewegungen, deren absoluter Ausgabewert unterhalb eines nichtoperativen Schwellenwertes (S0) liegt, ignoriert werden und keine Gestendetektion stattfindet (AUS), während Bewegungen, deren absoluter Ausgabewert den nichtoperativen Schwellenwert (S0) übersteigt, für die Gestenerkennung verwendet werden (AN), wobei das Verfahren des Weiteren einen Lernmodus zum Lernen von Gesten und Speichern derselben in der Fernsteuerung als komplexe oder einfache Bewegungssequenzen mit bestimmten Dynamiken in der Form einer LISTE VON GESTEN bereitstellt, wobei Änderungen in der Beschleunigung der Bewegungssequenz ausgewertet werden und charakteristische Merkmale oder auswertbare Unterscheidungen aus den Änderungen in der Beschleunigung abgeleitet werden, wobei die abgeleiteten charakteristischen Merkmale oder auswertbaren Unterscheidungen unter Bezugnahme auf eine gespeicherte Referenztabelle (LOOK-UP-TABELLE) sortiert werden, wobei ein Steuerbefehl einer Codetabelle (CODE-TABELLE) zum Bedienen von einer oder mehreren Terminaleinheiten wiederum individuell zu jeder GESTE in der LISTE VON GESTEN zugewiesen wird, wobei das Verfahren **dadurch gekennzeichnet ist, dass**
der Steuerbefehl durch den Nutzer zugewiesen wird, durch Verwendung eines Lernknopfes (LERNEN) an der Fernbedienung, wobei dem Nutzer durch Blinken (BLINKEN) des Knopfes angezeigt wird, dass Sensoren eine Bewegungssequenz detektiert haben, die bereits mehrere Male mit der Fernbedienung ausgeführt wurde, und wobei der Nutzer durch weiteres Drücken des Lernknopfes (LERNEN) der Fernbedienung signalisiert, eine spezifische Bedienfunktion (SCHLÜSSEL, CODE) mit der gerade ausgeführten detektierten Bewegungssequenz zu verlinken.

2. Verfahren nach Anspruch 1, **gekennzeichnet durch** die folgenden Verarbeitungsschritte:
- Aktivierung (110);
- Bewegungsdetektion (120);
- Gestenerkennung (130);
- Zuweisen eines Bedienbefehls (140);
- Ausgeben eines Bediencodes (150);
- Deaktivierung (160).

3. Gerät für die Fernbedienung von Terminaleinheiten oder Computern, umfassend:
- Detektionsmittel zum Detektieren von Bewegungssequenzen des Geräts für die Fernbedienung, und zum Interpretieren der Bewegungssequenzen als Gesten;
- Umwandlungsmittel zum Umwandeln der Gesten in Befehle zum Bedienen der Terminaleinheit oder des Computers;
- Übertragungsmittel zum Übertragen der Befehle an die Terminaleinheit oder den Computer;
- Speichermittel zum Speichern von Gesten, die in einem Lernmodus gelernt wurden, oder von vordefinierten Gesten, als komplexe oder einfache Bewegungssequenzen mit bestimmten Dynamiken in der Form einer LISTE VON GESTEN;
- Verarbeitungsmittel zum Verarbeiten von Beschleunigungsvariationen der Bewegungssequenzen und zum Ableiten von charakteristischen Merkmalen oder auswertbaren Unterscheidungen;
- Sortiermittel zum Sortieren der abgeleiteten charakteristischen Merkmale oder auswertbaren Unterscheidungen unter Bezugnahme auf eine gespeicherte Referenztabelle (LOOK-UP-TABELLE), wobei ein Steuerbefehl einer Codetabelle (CODE-TABELLE) zum Bedienen von einer oder mehreren der Terminaleinheiten oder Computer wiederum zu jeder Geste in der LISTE VON GESTEN zugewiesen wird,
wobei das Gerät **dadurch gekennzeichnet ist, dass** es des Weiteren Mittel umfasst, die angepasst sind, das Verfahren zum Bedienen von Terminaleinheiten oder Computern nach Anspruch 1 oder 2 zu implementieren.

4. Computerprogramm umfassend Computerprogrammcodemittel, die angepasst sind das Verfahren nach Anspruch 1 oder 2 durchzuführen, wenn das Programm auf der Fernbedienung nach Anspruch 1 oder 2 ausgeführt wird.

5. Computerlesbares Medium, umfassend ein darauf aufgezeichnetes Programm, wobei das computerlesbare Medium Computerprogrammcodemittel umfasst, die angepasst sind, das Verfahren nach Anspruch 1 oder 2 durchzuführen, wenn das Programm auf der Fernsteuerung nach Anspruch 1 oder 2 ausgeführt wird.

## Revendications

1. Procédé de commande d'unités terminales ou d'ordinateurs au moyen d'une télécommande, dans lequel le déplacement de la télécommande est détecté par un détecteur dans la télécommande et converti en ordres de commande, dans lequel des séquences de mouvements détectés sont interprétées de façon autonome par la télécommande comme des gestes et converties en ordres simplifiés pour commander l'unité terminale ou l'ordinateur, signifiant que ce ne sont pas les informations de mouvement elles-mêmes, mais uniquement les ordres qui en sont dérivés, qui sont transmis à l'unité terminale ou à l'ordinateur, des déplacements dont la valeur de sortie absolue est en dessous d'une valeur seuil de non-fonctionnement (S0) étant ignorés et aucune détection de geste n'ayant lieu (ARRET), alors que des déplacements dont la valeur de sortie absolue dépasse ladite valeur seuil de non-fonctionnement (S0) étant utilisés pour une détection de geste (MARCHE), le procédé fournissant en outre un mode d'apprentissage pour apprendre des gestes et les stocker dans la télécommande comme des séquences de mouvements complexes ou simples avec une certaine dynamique sous la forme d'une LISTE DE GESTES, dans lequel des changements d'accélération de la séquence de mouvements sont évalués et des particularités caractéristiques ou des distinctions évaluatives sont dérivées desdits changements d'accélération, lesdites particularités caractéristiques ou distinctions évaluatives dérivées étant triées en référence à une table de référence stockée (TABLEDECONSULTATION), un ordre de commande d'une table de code (TABLEDECODE) pour commander une ou plusieurs unités terminales étant à son tour individuellement alloué à chaque GESTE dans la LISTE DES GESTES,
le procédé étant **caractérisé en ce que**
ledit ordre de commande est alloué par ledit utilisateur, en utilisant un bouton d'apprentissage (APPRENTISSAGE) sur la télécommande, indiquant à l'utilisateur par un clignotement (CLIGNOTEMENT) du bouton que des capteurs ont détecté une séquence de mouvements qui a déjà été réalisée plusieurs fois avec la télécommande, et dans lequel ledit utilisateur en appuyant plus avant sur ledit bouton d'apprentissage (APPRENTISSAGE) signale à la télécommande de relier une fonction de commande spécifique (TOUCHE, CODE) à la séquence de mouvements détectés qui vient d'être réalisée.

2. Procédé selon la revendication 1, **caractérisé par** les étapes de traitement suivantes :
- une activation (110) ;
- une détection de mouvement (120) ;
- une détection de geste (130) ;
- une allocation d'un ordre de commande (140) ;
- une émission d'un code de commande (150) ;
- une désactivation (160).

3. Dispositif de télécommande d'unités terminales ou d'ordinateurs, comprenant :
- un moyen de détection, pour détecter des séquences de mouvements dudit dispositif pour la télécommande, et pour interpréter lesdites séquences de mouvements comme des gestes ;
- un moyen de conversion, pour convertir lesdits gestes en ordres pour commander ladite unité terminale ou ledit ordinateur ;
- un moyen de transmission pour transmettre lesdits ordres à ladite unité terminale ou audit ordinateur ;
- un moyen de stockage, pour stocker des gestes, appris dans un mode d'apprentissage ou des gestes prédéfinis, comme des séquences de mouvements complexes ou simples avec une certaine dynamique sous la forme d'une LISTE DE GESTES ;
- un moyen de traitement pour traiter des variations d'accélération desdites séquences de mouvements et pour dériver des particularités caractéristiques ou des distinctions évaluatives ;
- un moyen de triage pour trier lesdites particularités caractéristiques ou distinctions évaluatives dérivées en référence à une table de référence stockée (TABLEDECONSULTATION) où un ordre de commande d'une table de code (TABLEDECODE) pour commander un ou plusieurs desdits unités terminales ou ordinateurs est à son tour alloué à chaque GESTE dans la LISTE DES GESTES,
le dispositif étant **caractérisé en ce qu'**il comprend en outre un moyen adapté pour implémenter le procédé de commande d'unités terminales ou d'ordinateurs selon la revendication 1 ou 2.

4. Programme d'ordinateur comprenant un moyen de code de programme d'ordinateur adapté pour réaliser le procédé des revendications 1 ou 2, lorsque ledit programme est mis en oeuvre sur la télécommande des revendications 1 ou 2.

5. Support lisible par ordinateur sur lequel un programme est enregistré, ledit support lisible par ordinateur comprenant un moyen de code de programme d'ordinateur adapté pour réaliser le procédé des revendications 1 ou 2, lorsque ledit programme est mis en oeuvre sur la télécommande des revendications 1 ou 2.
